# EUROPÄISCHE PATENTSCHRIFT

(11) **EP 3 429 506 B1**
(45) Veröffentlichungstag und Bekanntmachung des Hinweises auf die Patenterteilung: **28.04.2021**
(21) Anmeldenummer: 17708736.8
(22) Anmeldetag: 01.03.2017
(51) Int. Cl.: A61C 17/22

(54) **ZAHNPFLEGEAUFSATZ FÜR AUSWECHSELBARE REINIGUNGSELEMENTE**
DENTAL CARE ATTACHMENT FOR INTERCHANGEABLE CLEANING ELEMENTS
SYSTÈME D'HYGIÈNE DENTAIRE POUR ÉLÉMENTS DE NETTOYAGE INTERCHANGEABLES

(30) Priorität: 14.03.2016 CH 3332016
(43) Veröffentlichungstag der Anmeldung: 23.01.2019
(73) Patentinhaber: Curaden AG, 6010 Kriens (CH)
(72) Erfinder: BREITSCHMID, Ueli, 6045 Meggen (CH)
(74) Vertreter: Keller Schneider Patent- und Markenanwälte AG (Bern)
(86) Internationale Anmeldenummer: PCT/EP2017/054793
(87) Internationale Veröffentlichungsnummer: WO 2017/157665

(56) Entgegenhaltungen:
- CN-Y- 201 127 384
- US-A- 4 030 199
- US-A- 4 030 199
- US-A- 4 030 199
- US-A- 4 319 377
- US-A- 5 127 415
- US-A- 5 127 415
- US-A- 5 435 033
- US-A- 5 435 033
- US-A- 5 435 033

## Beschreibung

### Technisches Gebiet

Die Erfindung betrifft einen Zahnpflegeaufsatz umfassend einen Bürstenträger und ein Verschlusselement, welcher in Längsrichtung verschiebbar am Bürstenträger gelagert ist und über eine Ausnehmung im Bürstenträger geschoben werden kann. Die Ausnehmung im Bürstenträger ist dazu geeignet ein Reinigungselement aufzunehmen.

Schliesslich betrifft die Erfindung auch ein Zahnpflegeaufsatzset welches einen erfindungsgemässen Zahnpflegeaufsatz und ein erfindungsgemässes Reinigungselement umfasst.

### Stand der Technik

Die WO 86 02532 A1 (Curaden) beschreibt einen manuellen Griff für Interdentalbürsten, wobei die Interdentalbürsten auswechselbar gehalten sind. Dort werden verschiedene Befestigungssysteme für Interdentalbürsten an Griffen beschrieben. So kann zum Beispiel die Bürste mit Hilfe eines schraubbaren oder aufschiebbaren Zylinders zwischen Zylinderinnenseite und Griff festgeklemmt werden. Die Klemmwirkung kann aber immer nur auf einen Teil einer Traverse der Interdentalbürste wirken, da ansonsten der Zylinder mit dem Borstenträger der Bürste kollidieren würde. Dies führt insbesondere dazu, dass eine Kraft die in Richtung Längsachse der Bürste wirkt, nicht symmetrisch aufgefangen werden kann. Ein solches System ist zum Beispiel nicht geeignet für die Verwendung mit motorischen Schwingungserzeugern wegen der schlechten Übertragung der Schwingungen vom Griff auf die Bürste. Zudem ist eine solche Verbindung einem unerwünschten Verschleiss ausgesetzt.

Die US 5,435,033 offenbart einen Interdentalbürstenhalter, der eine Interdentalbürste fest, aber einfach auswechselbar hält. Die Interdentalbürste dieses Systems hat einen langen, biegbaren Stiel. Ein Loch im Interdentalbürstenhalter ist dafür geeignet, dass der Stiel hindurchgesteckt werden kann. Eine Kappe ist verschiebbar angeordnet und verbiegt beim Verschieben den durch das Loch gesteckten Stiel, so dass die Interdentalbürste am Bürstenhalter befestigt ist.

Die US 4 030 199 A offenbart einen Halter für an einem Stiel montierte Bürsten für Dentalanwendungen. An einem oder beiden Enden sind Vorrichtungen zum Halten von stiel-montierten Geräten vorgesehen. Die Vorrichtungen zum Halten arbeiten mit einem separaten Mantel oder einer separaten Kappe zusammen, wobei der Mantel bzw. die Kappe eine Innenform aufweist, die dicht auf der Haltevorrichtung auf sitzen kann und in dieser Position von der Reibung gehalten wird.

Die US 5,127,415 A beschreibt einen Mehrzweck Dental Applikator mit einem Griff und auswechselbar am Griff halterbaren Bürsten für Dentalanwendungen. Der Griff weisst endseitig Ausnehmungen auf, welche durch eine stirnseitige Öffnung zugänglich sind. Aussenseitig ist ein Gewinde ausgebildet, auf welches eine Hülse aufschraubbar ist. Indem die Hülse gelöst wird, kann ein Halterungsstutzen des auswechselbaren Geräts in die Ausnehmungen eingeführt werden.

Weiter sind aus dem Stand der Technik elektrische Zahnbürsten bekannt. Diese bestehen häufig aus einem Kopf und einem davon trennbaren Schwingungserzeuger. Der Kopf ist mittels einer Steckverbindung am Schwingungserzeuger angebracht. Der Kopf umfasst typischerweise einen Stiel und einen Bürstenabschnitt. Für den Benutzer ist der Kopf ein einzelnes Teil, welches sich nicht ohne seine Zerstörung in Einzelteile zerlegen lässt. Der Stiel verlängert den Abstand zwischen Schwingungserzeuger und dem Bürstenabschnitt und ist in der Regel dünner als der Schwingungserzeuger, damit sich die Zähne besser erreichen lassen. Der Bürstenabschnitt trägt die Borsten, die der Reinigung dienen.

Die Schwingungen des Schwingungserzeugers sollen auf den Bürstenabschnitt übertragen werden. Im Stand der Technik geschieht dies durch eine werkseitige feste Verbindung zwischen Bürstenabschnitt und Stiel. Da der Bürstenabschnitt regelmässig gewechselt werden muss, ist auch der Stiel ein Verbrauchsteil und entsprechend günstig und einfach sollte er zu produzieren sein.

Der Schwingungserzeuger ist in vielen Fällen in ein Griffstück integriert.

Es gibt verschiedene Bürstentypen wie zum Beispiel Interdentalbürsten oder reguläre Zahnbürsten. Interdentalbürsten sind länglich und haben Borsten, welche senkrecht von ihrer Längsachse abstehen. Dabei stehen die Borsten in unterschiedliche Richtungen ab. Reguläre Zahnbürsten haben eine Grundfläche, auf welcher Borsten befestigt sind, und da die Grundfläche im Wesentlichen eben ist, stehen die Borsten im Wesentlichen parallel zueinander.

Andere Bürstentypen können zum Beispiel anders gekrümmte Grundflächen aufweisen und/oder die Borsten in anderen Winkeln zueinander stehen lassen.

### Darstellung der Erfindung

Aufgabe der Erfindung ist es, ein dem eingangs genannten technischen Gebiet zugehörenden Zahnpflegeaufsatz zu schaffen, bei welchem sich der Bürstenabschnitt unabhängig vom Stiel einsetzten und wechseln lässt. Die Verbindung soll dabei im Gebrauch des Zahnpflegeaufsatzes möglichst verschleissarm sein.

Dies erlaubt eine Reduktion der entstehenden Abfallmenge und eine aufwendigere Gestaltung des Zahnpflegeaufsatzes ohne wirtschaftliche Nachteile.

Die Lösung der Aufgabe ist durch die Merkmale der unabhängigen Ansprüche 1 und 13 definiert. Gemäss der Erfindung umfasst der Zahnpflegeaufsatz ein distales und ein proximales Ende. Das distale Ende ist dazu ausgelegt ein Reinigungselement aufzunehmen. Das proximale Ende ist dazu ausgelegt mit einem Griffstück in Wirkverbindung gebracht zu werden. Weiter umfasst der Zahnpflegeaufsatz:
a) Einen Bürstenträger mit einer Ausnehmung zur Aufnahme des Reinigungselements. Die Ausnehmung erstreckt sich im Wesentlichen quer zur Längsausdehnung durch den Bürstenträger.
b) Ein Verschlusselement, welches in Längsrichtung verschiebbar am Bürstenträger gelagert ist.

Das Verschlusselement weist zumindest einen Bereich auf, der über eine Oberseite der Ausnehmung geschoben werden kann und zwar insbesondere über einen Abschnitt der Ausnehmung, der sich vollständig durch den Bürstenträger erstreckt.

Ein Reinigungselement ist eine Ausführungsform eines Bürstenabschnittes.

Das proximale Ende und die Wirkverbindung mit einem Griffstück erlaubt es den Zahnpflegeaufsatz als Aufsatz an ein Griffstück, insbesondere ein Griffstück mit integriertem Schwingungserzeuger, zu nutzen. So kann der erfindungsgemässe Zahnpflegeaufsatz einer von mehreren, mit demselben Griffstück nutzbaren, Aufsätzen sein. Dies erlaubt es z.B. die Interdentalbürste mit einer Zahnbürste oder einer Munddusche zu ersetzten oder auch, dass verschiedene Personen jeweils ihre persönliche Interdentalbürste auf einem gemeinsamen Griffstück nutzen. Schliesslich ist es so auch einfach möglich, einen verschlissenen Zahnpflegeaufsatz auszutauschen.

Die Nutzung eines erfindungsgemässen Bürstenträgers und Verschlusselements erlaubt es dem Benutzer ein Reinigungselement einfach zu wechseln und somit an seine Bedürfnisse anzupassen oder zu ersetzen. Die Ausnehmung des Bürstenträgers verhindert dabei eine Verschiebung des Reinigungselements in zwei Raumdimensionen. Eine Verschiebung des Reinigungselements in die dritte Raumdimension erlaubt den Austausch des Reinigungselements. Damit diese Verschiebung nicht während der Benutzung oder ungewollt geschieht, wird das Verschlusselement derart über die Ausnehmung geschoben, dass die Bewegung des Reinigungselements relativ zum Bürstenträger in die dritte Raumdimension verhindert oder minimiert wird. Die Ausnehmung kann an unterschiedlichen Stellen entlang ihrer Längsausdehnung unterschiedliche Querschnitte haben. (Die Längsausdehnung der Ausnehmung steht erfindungsgemäss im Wesentlichen senkrecht zur Längsausdehnung des Bürstenträgers). Für die von der Erfindung gewünschte stabile Verbindung ist das Bedecken der Oberseite der Ausnehmung vor allem in den Bereichen wichtig, in denen sich die Ausnehmung vollständig durch den Bürstenträger erstreckt.

Die Möglichkeit der Bedeckung der ganzen Oberseite der Ausnehmung durch einen Bereich eines Verschlusselements ist in einer bevorzugten Ausführungsform gegeben. Diese hat den Vorteil, dass der Zahnpflegeaufsatz in einer montierten und geschlossenen Stellung eine Oberfläche mit nur wenigen Unebenheiten aufweist und daher weniger verschmutzungsanfällig ist.

Bei der relevanten Längsausdehnung des Bürstenträgers handelt es sich insbesondere um die Längsausdehnung in unmittelbarere Umgebung der Ausnehmung.

Die Ausrichtung der Ausnehmung kann ein Koordinatensystem definieren: Die Ausrichtung der Ausnehmung selbst ist dabei die dritte Raumdimension und eine Lage in dieser Dimension wird mit "oben" bzw. "unten" bezeichnet. Die Längsausdehnung des Bürstenträgers gibt die erste Raumdimension an und eine Lage in dieser Dimension wird mit "vorne" und "hinten" bezeichnet. Eine Richtung senkrecht zur dritten und ersten Raumdimension ist die zweite Raumdimension und eine Lage in der zweiten Raumdimension wird mit "rechts" und "links" oder "seitlich von.." bezeichnet. Die Orientierung dieser Angaben ergibt sich dabei wie folgt: Das Verschlusselement liegt höher als der Bürstenträger. Der Bürstenträger liegt weiter vorne als das proximale Ende. Vom proximalen Ende her nach vorne gesehen liegt die linke Seite links und die rechte Seite rechts in der zweiten Raumdimension.

Das distale Ende umfasst bevorzugt einen Resonator, den Bürstenträger und das Verschlusselement.

In einer besonderen Ausführungsform bestehen Bürstenträger und Verschlusselement aus Kunststoff. Insbesondere bestehen sie je aus einem Kunststoff mit einer bestimmten Shore-A Härte. Die Shore-A Härte des Bürstenträgers ist dabei insbesondere verschieden von der Shore-A Härte des Verschlusselements.

Weiter kann insbesondere die Shore-A Härte des Bürstenträgers höher sein als die Shore-A Härte des Verschlusselements.

Kunststoff eignet sich auf Grund seiner Haptik, seiner Wasserfestigkeit, der einfachen Reinigung und der regulierbaren Härte gut für Zahnpflegeaufsätze. Der Bürstenträger sollte eine präzise Positionierung und Kraftregulierung auf das Reinigungselement erlauben. Daher ist eine eher hohe Shore-A Härte nötig. Das Verschlusselement hingegen soll bei der Verschiebung den Bürstenträger und auch das Reinigungselement nicht beschädigen. Es kann auch vorteilhaft sein, wenn das Verschlusselement eine gewisse Federfunktion übernehmen kann und einen ungewollten Kraftstoss auf das Reinigungselement in Richtung der dritten Raumdimension auffangen kann. Ein solcher Kraftstoss könnte bei der Benutzung einer Interdentalbürste z. B. dann auftreten, wenn ein Benutzer sich die Bürste gegen einen Zahn schlägt und ein etwas nachgiebiges Verschlusselement kann in diesem Fall eine Verletzung verhindern. All diese Möglichkeiten eröffnen sich, wenn die Shore-A Härte des Verschlusselements kleiner als diejenige des Bürstenträgers gewählt wird.

Die Federwirkung kann in bestimmten Anwendungen allerdings auch hinderlich sein, da sie die Kraftübertragung verzögert. Daher ist auch eine Ausführungsform denkbar, in der die Shore-A Härten beider Teile gleich gross sind. Je nach den gewünschten Schwingungseigenschaften des Bürstenträgers kann es auch vorteilhaft sein, seine Shore-A Härte kleiner als diejenige des Verschlusselements zu wählen.

Erfindungsgemäß weist das Verschlusselement in dem Bereich, der über die Ausnehmung des Bürstenträgers geschoben werden kann, mindestens eine Schulter mit mindestens einer ersten Kontaktfläche auf. Die Schulter ist dazu ausgelegt mindestens eine zweite Kontaktfläche des Reinigungselements zu kontaktieren. Die Schulter erlaubt mehr Gestaltungsmöglichkeiten des Bürstenträgers in dem Bereich der Ausnehmung, da auf diese Art dort weniger Rücksicht auf die Befestigung und den Schiebemechanismus des Verschlusselements genommen werden muss. Die Umgebung der Ausnehmung kann z.B. so geformt sein, dass die Ausnehmung das Reinigungselement besonders gut fixiert oder dass sich das Reinigungselement besonders gut einsetzten lässt oder dass das Reinigungselement und das Verschlusselement besser geschützt sind. Da sich die Ausnehmung bevorzugt am distalen Ende der Bürstenträgers befindet, ist das Risiko, gerade in diesem Bereich den Zahnpflegeaufsatz anzuschlagen, eher hoch. Das macht einen verbesserten Schutz in diesem Bereich wünschenswert.

Geht man davon aus, dass das Material des Bürstenträgers härter gewählt wurde als das des Verschlusselements, so ist es von Vorteil, wenn der Bürstenträger Stösse und Schläge abfängt und das Verschlusselement schützt. Daher weist der Bürstenträger bevorzugt einen Vorstand auf, welcher die Ausnehmung soweit umgibt, dass nur gerade für die Schulter des Verschlusselements ein Unterbruch vorliegt. Weiter kann der Vorstand derart geformt sein, dass er die Aussenseite der Schulter teilweise aufnehmen kann. Dadurch wird die Befestigung des Bürstenträgers im Bereich des Schiebemechanismus entlastet, da ein Teil des Druckes, der durch den Gebrauch des Reinigungselements auf das Verschlusselement ausgeübt wird, von der Aussenseite der Schulter an den Vorstand des Bürstenträgers weitergeleitet wird.

Die erste Kontaktfläche kann entweder speziell geformt sein, um mit der zweiten Kontaktfläche in Kontakt zu treten und einen guten Sitz des Reinigungselements zu erreichen, oder es kann sich einfach um eine nicht speziell gekennzeichnete Fläche des Verschlusselements handeln. Ist die erste Kontaktfläche speziell geformt, so kann es sich insbesondere um eine Kontakteinbuchtung oder einen Kontaktvorstand handeln. Eine Kontakteinbuchtung hat dabei den Vorteil, dass eine Art Rastverbindung entstehen kann, bei der die zweite Kontaktfläche in die erste Kontaktfläche in der Form einer Kontakteinbuchtung einrastet. Die Rastverbindung sichert dabei das Verschlusselement gegen versehentliches Wegrutschen nach vorne oder nach hinten.

Alternativ oder ergänzend kann eine Rastverbindung aber auch dadurch realisiert werden, dass zum Beispiel die zweite Kontaktfläche eine Kontakteinbuchtung umfasst, in welche eine erste Kontaktfläche in Form eines Kontaktvorstandes eingreift.

Eine oder beide der Kontaktflächen können mit einer Oberflächenstruktur ausgerüstet sein, die ein Wegrutschen des Verschlusselements, d.h. ein Lösen der Verbindung, verhindert und/oder ein Aufschieben erleichtert. Es kann sich bei der Oberflächenstruktur z.B. um Rillen oder sich überlagernde Dreiecke handeln. Oberflächenstrukturen, die ein Gleiten oder Rutschen in eine Richtung fördern, aber in die Gegenrichtung behindern, sind auch aus anderen technischen Gebieten wie z.B. bei Skis bekannt und können hier genutzt werden.

In einer weiteren Ausführungsform hat die Ausnehmung zumindest teilweise einen nicht-kreisrunden Querschnitt bezüglich der Längsachse der Ausnehmung. Insbesondere weist der Querschnitt bezüglich der Längsachse der Ausnehmung zwei gegenüberliegende, radiale Ausbuchtungen auf.

Der nicht-kreisrunde Querschnitt der Ausnehmung erlaubt es, ein Reinigungselement so zu gestalten, dass das Reinigungselement gegenüber einer Drehung um seine Längsachse bzw. um die Drehung der Längsachse der Ausnehmung gesichert ist. Damit kann das Reinigungselement kontrolliert um seine Längsachse rotiert werden, was für die Reinigung vorteilhaft sein kann.

Die genaue Form des nicht-runden Teils der Ausnehmung ist im Prinzip beliebig: Ein Sechseck oder ein anderes Polygon verteilt bei einer Drehung auftretende Kräfte gleichmässiger auf die Oberflächen der Ausnehmung und des Reinigungselements. Gleichzeitig stellt eine solche Form aber höhere Anforderungen an die Fertigungsgenauigkeit. In engen Kanten der Ausnehmung kann sich Schmutz ansammeln, der schwer zu entfernen ist. Radiale Ausbuchtungen können in ihrer Tiefe mit sehr grossen Toleranzen gefertigt werden. Wenn diese radialen Ausbuchtungen sich in bürstenseitige Richtung hin (also nach unten) bis auf einen Zielquerschnitt hin verengen und daher in bürstenabgewandter Richtung (also nach oben) vergleichsweise breit sind, so erleichtert sich das Einsetzen des Reinigungselements: Das Reinigungselement wird dann von den Ausbuchtungen in die korrekte Position geleitet, während es in Bürstenrichtung gebracht wird (also nach unten gebracht wird).

In einer weiteren Ausführungsform umfasst der Bürstenträger eine Oberfläche, über und um welche das Verschlusselement entlang des Bürstenträgers verschiebbar gelagert ist. Diese ist im Wesentlichen eben und wird Schiebefläche genannt.

Eine ebene Schiebefläche erlaubt es, dass eine ebene Schulter des Verschlusselements entlang der gesamten Strecke, die das Verschlusselement verschoben werden kann, im Wesentliche denselben, bevorzugt kleinen, Abstand von der Schiebefläche hat. Damit sinkt die Gefahr, dass unerwünschter Schmutz oder Fremdkörper zwischen Schiebefläche und Verschlusselement geraten. Eine ebene Schulter meint hier eine Schulter, deren der Ausnehmung zugewandte Seite (also deren Unterseite) eben ist. Eine ebene Schulter ist einfach zu produzieren und spart Platz.

Ein kleiner Abstand ist zum Beispiel vorzugsweise ein Abstand von weniger als ¼ der Dicke des Verschlusselements an der Stelle oberhalb der Abstandsmessstelle. Gleichzeitig ist der Abstand aber bevorzugt grösser als 0 über grosse Teile der Unterseite des Verschlusselements hinweg, da auf diese Art die Reibung zwischen Bürstenträger und Verschlusselement reduziert werden kann.

Alternativ sind aber auch andere Formen der Schulter denkbar und in diesen Fällen kann man den kleinen Abstand zwischen Schulter und Schiebefläche dadurch erreichen, dass die Schiebefläche komplementär zur Schulter geformt ist. Beispielsweise kann eine Schulter einen Kreisrohrabschnitt darstellt, und eine Schiebefläche ein Teil einer Zylinderfläche sein.

In einer weiteren Ausführungsform umfasst das Verschlusselement einen Befestigungsbereich. Der Befestigungsbereich umgreift, im montierten Zustand, die Schiebefläche des Bürstenträgers zumindest teilweise. Das Umgreifen ist dabei derart dicht, dass eine Verschiebung des Verschlusselements gegenüber dem Bürstenträger auf der Schiebefläche mit einzelnen Fingern möglich ist, ein Trennen von Verschlusselement und Bürstenträger aber einen grösseren Kraftaufwand benötigt. Dieser grössere Kraftaufwand ist insbesondere so gross, dass ein durchschnittlicher, erwachsener Mensch ihn nicht mehr mit einzelnen Fingern, wohl aber ohne zusätzliches Werkzeug mit seinen Händen und Armen ausüben kann.

Das Umgreifen der Schiebefläche durch den Befestigungsbereich des Verschlusselements ist eine einfache Form der Schiebeverbindung und somit ein Beispiel für einen einfachen Schiebemechanismus. Der Vorteil dieser Art von Schiebeverbindung liegt darin, dass nur die zwei, sich gegeneinander verschiebende Teile gebraucht werden.

Der Kraftaufwand für die Verschiebung des Bürstenträgers relativ zum Verschlusselement bestimmt sich unter anderem dadurch, aus welchen Materialien, mit welchen Strukturen das Verschlusselement und der Bürstenträger sind und wie eng des Umgreifen ist. Der Kraftaufwand lässt sich daher durch die Änderung von einem oder mehreren dieses Parameter regulieren.

Der Kraftaufwand der benötigt wird um das Verschlusselement vom Bürstenträger zu trennen hängt ebenfalls von den verwendeten Materialien ab. Weiter ist aber auch entscheidend wie weit umgriffen wird.

Bei gegebenen Materialien lässt sich daher der Kraftaufwand für die Verschiebung durch die Enge des Umgreifens und der Kraftaufwand für die Trennung durch die Weite des Umgreifens steuern.

Hier soll bevorzugt dann ein Umgreifen vorliegen, wenn folgendes erfüllt ist: Man betrachte den Querschnitt von Bürstenträger und Verschlusselement senkrecht zur Längsachse des Bürstenträgers. Die Innenseite des Verschlusselements ist nun derjenige Teil des Querschnittumfangs des Verschlusselements, der dem Querschnitt des Bürstenträgers zugewandt ist. Nun wählt man eine Verbindungslinie zwischen zwei Punkten auf der Innenseite des Verschlusselements, wobei diese Verbindungslinie den Querschnitt des Verschlusselements nicht schneiden soll. Diese Verbindungslinie hat eine Länge x. Ein Teil der Innenseite des Verschlusselements und die Verbindungslinie bilden zusammen eine geschlossene Form. Zeichnet man nun Parallelen der Verbindungslinie in diese geschlossene Form, so können diese Parallelen den Querschnitt des Bürstenträgers schneiden. Nun vergleicht man die Länge y, auf der eine Parallele den Querschnitt des Bürstenträgers schneidet, mit x. Wenn es eine Verbindungslinie und eine Parallele zu ihr gibt, für die y>x gilt, so liegt ein Umgreifen vor. Die Weite des Umgreifens ist bevorzugt y-x.

Bevorzugt lassen sich Bürstenträger und Verschlusselement zerstörungsfrei voneinander trennen, aber unter einem deutlichen Kraftaufwand. Dies erlaubt eine getrennte Reinigung der Komponenten. Um den Verlust des Verschlusselements zu verhindern, kann es aber auch vorteilhaft sein, das Umgreifen derart zu gestalten, dass eine Trennung nur unter Zerstörung des Verschlusselements oder des Bürstenträgers möglich ist.

Ein "Verschieben mit einzelnen Fingern" soll hier insbesondere dann vorliegen, wenn die Handfläche nicht bewegt wird, sondern ausschliesslich ein oder zwei einzelne Finger. Ein "Kraftaufwand der mit Händen und Armen" ausgeübt werden kann, soll hier bevorzugt folgendes umfassen: Die zu trennenden Teile werden mit mehren Fingern fest gegriffen und die Hände dann, auch unter Benutzung der Arme, auseinander gezogen. Dabei muss die Kraft nicht ausschliesslich in eine Richtung ausgeübt werden, sondern es kann auch kleinere Kraftkomponenten senkrecht zur Hauptrichtung geben (z.B. ein Rütteln oder Drehen).

Eine Verschiebung des Verschlusselements durch einzelne Finger, soll bevorzugt bis zu einer Kraft von 10 N, besonders bevorzugt bis zu einer Kraft von 5 N, insbesondere von 1 N, möglich sein.

Der Kraftaufwand für die Trennung von Verschlusselement und Bürstenträger kann insbesondere zwischen 5 N und 100 N betragen, bevorzugt zwischen 10 N und 50 N.

Der Kraftaufwand zum Schliessen oder Öffnen der Rastverbindung zwischen Zahnpflegeaufsatz und Reinigungselement ist bevorzugt grösser als der Kraftaufwand zum Verschieben des Verschlusselements, aber kleiner als der Kraftaufwand für die Trennung von Verschlusselement und Bürstenträger. Insbesondere handelt es sich um einen Kraftaufwand der immer noch durch einzelne Finger ausgeübt werden kann und der dennoch ein Vielfaches über der Gravitationskraft des Verschlusselements liegt. Insbesondere soll der Kraftaufwand zum Öffnen der Rastverbindung bevorzugt nicht kleiner sein als das 3-fache, besonders bevorzugt das 10-fache, des Gewichtes des Verschlusselements multipliziert mit der Gravitationsbeschleunigung auf der Erde. Der Kraftaufwand zum Schliessen kann sich von dem zum Öffnen unterscheiden. Insbesondere kann der Kraftaufwand zum Schliessen kleiner sein als derjenige zum Öffnen.

In einer weiteren Ausführungsform weist das proximale Ende eine Aufsteckverbindung zur Aufnahme eines Schwingungserzeugers auf.

Eine Aufsteckverbindung erlaubt einerseits ein einfaches Zusammensetzen und Trennen von Schwingungserzeuger und Zahnpflegeaufsatz und andererseits eine Übertragung der Schwingungen, sowie eine sichere Befestigung des Zahnpflegeaufsatzes an dem Schwingungserzeuger. Mit einer asymmetrischen Steckverbindung lässt sich auch die Schwingungsebene relativ zum Reinigungselement festlegen, da dann Schwingungserzeuger und Reinigungselement eine klar definierte Position relativ zueinander haben.

Alternativen oder Ergänzungen zu Steckverbindungen sind zum Beispiel Schraubverbindungen oder Klebeverbindungen.

Der Schwingungserzeuger kann sich in einem Griffteil befinden oder selbst ein Griffteil darstellen. Der Schwingungserzeuger kann die Schwingungen direkt an der Verbindung verursachen oder aber an einer anderen Stelle und sie intern durch geeignete Vorrichtungen bis zur Verbindung weiterleiten.

Der Schwingungserzeuger erzeugt bevorzugt Schwingungen mit Frequenzen zwischen 200 und 500 Hz, bevorzugt zwischen 250 und 300 Hz.

In einer weiteren Ausführungsform umfasst der Zahnpflegeaufsatz einen Resonator, der sich durch eine inhomogene Massenverteilung und insbesondere eine stetige Oberfläche auszeichnet.

Die inhomogene Massenverteilung ist insbesondere derart gestaltet, dass eine Anregung mit einer bekannten Schwingung am proximalen Ende zu einer vordefinierten Schwingung des Bürstenträgers führt.

Die inhomogene Massenverteilung erlaubt es die Schwingungseigenschaften des Zahnpflegeaufsatzes festzulegen. Eine inhomogene Massenverteilung kann insbesondere durch die Verwendung verschiedener Materialien oder verschieden strukturierter Materialien erreicht werden. So kann es zum Beispiel unterschiedliche Hohlräume im Inneren des Resonators geben. Oder ein weniger dichtes und ein dichteres Material können unterschiedlich zueinander angeordnet werden.

Mit einer stetigen Oberfläche ist hier eine Oberfläche ohne Sprünge, Risse oder Kanten in der Grössenordnung von im Wesentlichen 0.1-1 mm gemeint. Auch sollen Öffnungen, Löcher und Vertiefungen die grösser sind, bevorzugt nicht vorkommen. Von aussen unterschiedet sich die Oberfläche des Resonators daher bevorzugt nicht wesentlich von der des proximalen Endes und der des Bürstenträgers. In einer bevorzugten Ausführungsform sind aber dennoch auch an der Oberfläche unterschiedliche Materialien erkennbar.

Eine bekannte Schwingung kann insbesondere durch ihre Frequenzen und Amplituden und Schwingungsebenen gekennzeichnet werden. Durch die Übertragung durch einen inhomogenen Resonator kann sich die Schwingung ändern, da es zum Beispiel zu Resonanzeffekten kommen kann oder bestimmte Schwingungsebenen und/oder Frequenzen anders gedämpft werden als andere.

Es muss dabei nicht nur die Massenverteilung sein, die diese Effekte bewirkt, sondern auch Materialeigenschaften können eine Rolle spielen. Die "inhomogene Massenverteilung" soll also recht weit verstanden werden und als Bezugsvolumen bevorzugt die Umhüllende des Resonators verwenden: Eine Gitterstruktur aus einem homogenen Material soll daher z.B. im Rahmen dieser Anmeldung bevorzugt als "inhomogene Massenverteilung" verstanden werden. Ebenso kann es sich aber auch einfach um bewusst gestaltete, lokale Dichteschwankungen eines Materials handeln, die bevorzugt eine erfindungsgemässe "inhomogene Massenverteilung" darstellen.

Ein Reinigungselement, das sich für die Aufnahme in einen Zahnpflegeaufsatz eignet, umfasst einen Bürstenteil und einen Halterteil, wobei der Halterteil borstenlos ist und, vom Bürstenteil beabstandet, mindestens einen Vorstand aufweist. Weiter umfasst der Halterteil eine zweite Kontaktfläche.

Der Bürstenteil umfasst die eigentliche Bürste mit ihren Borsten oder anderen Reinigungshilfen. Der Bürstenteil kann einen beliebigen Bürstentyp umfassen. Der Halterteil erlaubt die Aufnahme in einen Zahnpflegeaufsatz. Dazu weist er mindestens einen Vorstand auf der. Dieser Vorstand erlaubt eine Positionierung in der Ausnehmung des Bürstenträgers. Die zweite Kontaktfläche ist der Reinigungselement-seitige Teil der Rastverbindung. Diese zweite Kontaktfläche kann in Kontakt mit der ersten Kontaktfläche des Verschlusselements gebracht werden.

Der Vorstand sollte vom Bürstenteil beabstandet sein, damit im montierten Zustand der Vorstand zumindest teilweise zwischen Bürstenträger und Verschlusselement liegt. Auf diese Art kann das Reinigungselement am Zahnpflegeaufsatz fixiert werden.

Ein Reinigungselement, der sich für die Aufnahme in einen Zahnpflegeaufsatz eignet, ist dadurch gekennzeichnet, dass er mindestens einen Vorstand aufweist, der zumindest teilweise einen nicht-kreisrunden Querschnitt bezüglich einer Längsachse des Reinigungselements aufweist. Insbesondere kann es sich um zwei gegenüberliegende Vorstände handeln. Die Vorstände können insbesondere balkenförmig sein. Die Oberseiten der Vorstände liegen insbesondere weiter bürstenseitig (also tiefer) als die zweite Kontaktfläche des Reinigungselements.

Der mindestens eine Vorstand und die zweite Kontaktfläche sind Teile des Halterteils. Nicht-kreisrunde Vorstände erlauben, wenn das Reinigungselement in einem Bürstenträger mit einer komplementär geformten Ausnehmung genutzt wird, eine Sicherung gegen eine Drehung des Reinigungselements um seine Längsachse beziehungsweise um die Längsachse der Ausnehmung. Mögliche Formen und Vorteile wurden im Zusammenhang mit dem nicht-kreisrunden Teil der Ausnehmung des Bürstenträgers diskutiert.

Balkenförmige Vorstände lassen sich vergleichsweise einfach herstellen. Es kann sogar ein Balken aus einem anderen Material als des übrigen Halterteils genutzt werden. Balkenförmige Vorstände lassen sich beim Formen eines Halterteiles z.B. aus Kunststoff herstellen. Oder ein Halterteil-Rohling kann nachträglich durchbohrt werden und ein Balken kann in der Bohrung befestigt oder einfach hindurchgesteckt werden. (Die Grenzen der Ausbuchtungen der Ausnehmung können ein Herausrutschen des Balkens im montierten Zustand verhindern). Ein Balken kann auch mit eingegossen werden, wenn das Halterteil als Gussteil produziert wird.

Mit "Oberseite" ist hier die Bürstenteil-abgewandte Seite gemeint. Liegt die Oberseite der Vorstände weiter bürstenseitig (also näher an dem Bürstenteil bzw. tiefer) als die zweite Kontaktfläche, so kann der Kontakt und damit die Druckübertragung in dem definierten Kontaktbereich zwischen der ersten und zweiten Kontaktfläche stattfinden. Die Vorstände müssen in diesem Fall dann nicht berücksichtigt werden, wenn zum Beispiel die Kontaktoberflächen so entworfen werden, dass eine Rastverbindung unter gegebenen Kräften zustande kommt und gelöst werden können soll.

Je nachdem wie weit Bürstenteil-seitig (also wie tief) die Vorstände angebracht werden, kann die Lage des Bürstenteils und der zweiten Kontaktfläche bezüglich des Bürstenträgers eingestellt werden.

In einer bevorzugten Ausführungsform ist das Bürstenteil als Interdentalbürste ausgeführt.

Dieser Bürstentyp kann die Gestaltungsmöglichkeiten des Zahnpflegeaufsatzes sehr gut nutzen, da vergleichsweise grosse Schwingungsamplituden gewünscht werden. Alternativ oder ergänzend kann es sich bei dem Bürstenteil aber auch um eine reguläre Zahnbürste oder einen anderen Bürstentyp handeln. Die Gestaltungsmöglichkeiten des Zahnpflegeaufsatzes lassen eine Anpassung je nach Bürstentyp zu.

Ein Zahnpflegeaufsatzset umfasst einen Zahnpflegeaufsatz und ein Reinigungselement. Bevorzugt entspricht der Zahnpflegeaufsatz einem der oben beschriebenen Zahnpflege-Aufsätzen und das Reinigungselement einem der oben beschriebenen Reinigungselemente.

In einer bevorzugten Ausführungsform ist in dem Zahnpflegeaufsatzset die Ausnehmung des Bürstenträgers komplementär zu dem mindestens einen Vorstand des Reinigungselements gestaltet.

Diese komplementäre Ausgestaltung erlaubt eine verdrehungssichere Verbindung zwischen Reinigungselement und Bürstenträger. Dabei muss nicht zwingend die gesamte Ausnehmung des Bürstenträgers komplementär zu den Vorständen gestaltet sein: Für die verdrehungssichere Verbindung genügt es, dass ein Teil der Vorstände von einem Teil der Ausnehmung aufgenommen werden kann. Die Ausnehmung kann zum Beispiel so gestaltet sein, dass auf der bürstenteilabgewandten Seite (also oben) ein grosser Bereich besteht, in welchen die Vorstände platziert werden können und sich dieser Bereich in Richtung auf den Bürstenteil zu (also nach unten hin) verjüngt bis zu einem, den Vorständen komplementären, Bereich. Dies hat den Vorteil, dass das Einsetzen des Reinigungselements vereinfacht wird.

Sind Ausnehmung und Vorstände nicht komplementär zueinander, so können sie sich zumindest in einem gewissen Masse gegeneinander verdrehen und damit kann sich dann auch das Reinigungselement gegenüber dem Bürstenträger verdrehen. Da die Reinigungswirkung der Bürste bei einer Interdentalbürste primär durch eine Bewegung entlang der Längsachse des Reinigungselements zustande kommt, ist eine Rotation des Reinigungselements um diese Längsachse nicht zwingend nachteilig.

In einer bevorzugten Ausführungsform des Zahnpflegeaufsatzsets ist die Ausnehmung des Bürstenträgers derart ausgestaltet, dass, im montierten Zustand, die zweite Kontaktfläche des Reinigungselements über die Schiebefläche herausragt, wobei die Höhe, um die die zweite Kontaktfläche über die Schiebefläche herausragt kleiner ist, als die Höhe, um die das Verschlusselement die Schiebfläche überragt.

Im montierten Zustand befinden sich die Vorstände des Reinigungselements in der Ausnehmung des Bürstenträgers. Wenn es sich um eine Ausführungsform handelt, in der Vorstände und Ausnehmung zumindest teilweise komplementär zueinander sind, so befinden sich die Vorstände des Reinigungselements im montierten Zustand bevorzugt an der ihnen komplementären Stelle des Bürstenträgers.

Wenn nun die zweite Kontaktfläche zwar über die Schiebefläche ragt, dieses Überragen aber kleiner ist als die Höhe, um die das Verschlusselement die Schiebefläche überragt, so lässt sich das Verschlusselement derart gestalten, dass es teilweise über das montierte Reinigungselement geschoben werden kann und in dieser aufgeschobenen Position das Reinigungselement an der zweiten Kontaktfläche berührt. So kann eine Rastverbindung erreicht werden.

Alternativ kann die zweite Kontaktfläche im montierten Zustand auch unterhalb oder auf der Höhe der Schiebefläche liegen: Dann kann ein Kontakt zwischen Verschlusselement und Reinigungselement durch zur Schiebefläche hin (nach unten) zeigende Kontaktvorstände oder eine auf der Schiebefläche aufliegende Fläche des Verschlusselements erreicht werden. Derartige Kontaktvorstände und/oder Flächen treten auch mit der Schiebefläche in Kontakt, und daher braucht das Verschieben des Verschlusselements entlang der Schiebefläche einen grösseren Kraftaufwand. Dieser kann aber immer noch so gering sein, dass die Nutzung problemlos möglich ist.

Ist die zweite Kontaktfläche im montierten Zustand oberhalb der Höhe um die das Verschlusselement die Schiebfläche überragt, so kann das Verschlusselement eine Aufnahme aufweisen, in die ein Teil des Reinigungselements aufgenommen wird, während die zweite Kontaktfläche das Verschlusselement überragt. Diese Ausführungsform überträgt die Kraft in Längsrichtung des Reinigungselements weniger gut, da nur wenige bis keine Auflageflächen mit Normalen, die in Richtung der Kraft zeigen, bestehen. Die Reibung zwischen Verschlusselement und einem Teil des Reinigungselements ist hauptsächlich für die Kraftübertragung zuständig. Diese Lösung kann daher genutzt werden, wenn die übertragenen Kräfte beschränkt werden sollen, um z.B. Verletzungen auszuschliessen.

In einer bevorzugten Ausführungsform eines Zahnpflegeaufsatzsets bilden das Verschlusselement, insbesondere die erste Kontaktfläche, und das in der Ausnehmung gehaltene Reinigungselement, insbesondere mit seiner zweiten Kontaktfläche, eine Rastverbindung. Diese Rastverbindung stellt insbesondere einen derart dichten Kontakt zwischen Reinigungselement und Zahnpflegeaufsatz her, dass Schwingungen des Zahnpflegeaufsatzes im Wesentlichen ohne Verluste auf das Reinigungselement übertragen werden.

Für eine solche Rastverbindung nimmt der Druck zwischen Reinigungselement und Verschlusselement beim Aufschieben des Verschlusselements über die Ausnehmung mit dem montierten Reinigungselement zunächst zu und dann wieder etwas ab und später wiederum zu. Die Region, in der der Druck etwas abnimmt, stellt die "Reinigungselement-Fixiert"-Stellung dar. Durch die Zunahme des Druckes in alle Richtungen, in die das Verschlusselement verschoben werden kann, wird die "Reinigungselement-Fixiert"-Stellung gegen unbeabsichtigtes Lösen gesichert. Die Stärke der Druckabnahme bzw. der Druckverlauf während des Verschiebens wird dabei durch die Geometrie des Verschlusselements, insbesondere durch die Geometrie seiner ersten Kontaktfläche und der zweiten Kontaktfläche des Reinigungselements, bestimmt.

Wie oben schon beschrieben, kann entweder die zweite Kontaktfläche über die Schiebefläche hinausragen und eine Kontakteinbuchtung vorliegen, oder die zweite Kontaktfläche liegt unterhalb der Schiebefläche und ein Kontaktvorstand ist vorhanden, oder die erste und die zweite Kontaktfläche liegen auf Höhe der Schiebefläche. Bevorzugt ragt die zweite Kontaktfläche über die Schiebefläche hinaus und es gibt eine Kontakteinbuchtung.

In einer weiteren Ausführungsform des Zahnpflegeaufsatzsets besteht das Reinigungselement im Bereich der Vorstände und der zweiten Kontaktfläche aus mindestens einem Material mit einer Shore-A Härte grösser als die Shore-A Härte des Verschlusselements. Insbesondere, besteht das Reinigungselement in dem besagten Bereich aus einem Material mit einer Shore-A Härte gleich der Shore-A Härte des Bürstenträgers.

Eine grössere Härte des Reinigungselements verglichen mit dem Verschlusselement führt dazu, dass sich in dieser bevorzugten Ausführungsform das Verschlusselement, beim Aufschieben über das Reinigungselement, eher verformt als das Reinigungselement. Dadurch ist die Lage des Reinigungselements präzise festlegbar. Die Shore-A Härte des Bürstenträgers wird nun so gewählt, dass einerseits eine präzise Positionierung möglich ist und andererseits aber die Schwingungen in einer gewünschten Weise übertragen werden und die Verletzungsgefahr durch Bruch bei zu starkem Druck minimiert wird. Dies sind im Prinzip die selben Anforderungen, die auch an das Reinigungselement gestellt werden, auch wenn hier zum Beispiel ein Bruch weniger kritisch ist und die interne Schwingungsübertragung dank der kurzen Ausdehnung weniger wichtig ist. Trotzdem bietet es sich an, für das Reinigungselement eine Shore-A Härte zu wählen, die sich auch für einen Bürstenträger eignen würde, und die insbesondere gleich der Härte des vorliegenden Bürstenträgers ist. Allerdings kann auch bei anders gewählter Shore-A Härte des Reinigungselements noch eine genügende Präzision und Sicherheit für den normalen Anwender erreicht werden.

In einer weiteren Ausführungsform besteht der Halterteil des Reinigungselements aus einem Material und ist einstückig geformt.

In einer weiteren Ausführungsform weist das Verschlusselement im Bereich der Schulter eine erste Kontaktfläche auf, die gegenüber dem Rest der Fläche des Verschlusselements, welche im montierten Zustand der Schiebefläche zugewandt ist, um eine gewisse Tiefe zurückversetzt ist. Die Tiefe ist derart gewählt, dass der Hohlraum, der zwischen Schiebefläche und erster Kontaktfläche entsteht, wenn das Verschlusselement die Ausnehmung bedeckt, im Wesentlichen dem Volumen entspricht, um welches das Reinigungselement und seine zweite Kontaktfläche im montierten Zustand über die Schiebefläche hinausragen.

Dies ist eine Variante der schon erwähnten Rastverbindung mit einer ersten Kontaktfläche in Form einer Kontakteinbuchtung. Hier gibt es, im montierten und geschlossenen Zustand der Kombination von Zahnpflegeaufsatz und Reinigungselement, nur wenige bis keine Hohlräume zwischen Reinigungselement und Verschlusselement. Dadurch wird die Verbindung zwischen Reinigungselement und Verschlusselement gestärkt und das Reinigungselement fester gehalten. Kleinere Hohlräume und dadurch Zusatzvolumen sollen allerdings nicht ausgeschlossen werden, da zumindest ein Teil der Kanten der Kontakteinbuchtung und/oder der zweiten Kontaktfläche bevorzugt rampenartig abgeschrägt sind. Dadurch lässt sich die Rastverbindung wieder lösen. Die Steilheit der Kanten kann dabei genutzt werden, um den Kraftaufwand, der zum Lösen der Rastverbindung nötig ist, einzustellen.

Die Kontakteinbuchtung ist eine Ausführungsform der ersten Kontaktfläche.

Ein Verfahren zur Entwicklung eines Zahnpflegeaufsatzes (16) eines erfindungsgemäßen Zahnpflegeaufsatzsets umfasst folgende Schritte:
a) Bestimmung der Schwingung, insbesondere der Frequenzen und Amplituden, eines Schwingungserzeugers;
b) Festlegung einer Schwingung, insbesondere der Frequenzen und Amplituden, die das Verschlusselement oder das Reinigungselement ausführen soll;
c) Bestimmung von Schwingungseigenschaften eines oder mehrerer unterschiedlicher Materialien, insbesondere Kunststoffe;
d) Berechnung und/oder Simulationen und/oder Versuche zur Anordnung und/oder Formgebung von einem oder mehreren der Materialien, insbesondere Kunststoffe, bei denen die in Schritt b) festgelegte Schwingung durch eine Anregung mit der in Schritt a) bestimmten Schwingung im Wesentlichen erreicht wird;
e) Speicherung der in Schritt d) erreichten Anordnung und der dadurch erzeugten Massenverteilung, die insbesondere inhomogen ist.

Die Bestimmung der Schwingung eines Schwingungserzeugers und die Bestimmung von Schwingungseigenschaften unterschiedlicher Materialien kann mit Hilfe einer Messung oder durch Nachschlagen in einem Datenblatt geschehen oder aus anderen Quellen kommen.

Es ist wohl bekannt, dass sich jede Schwingung als Überlagerung von Sinusschwingungen mit gegebenenfalls verschiedenen Frequenzen und Amplituden und Phasenverschiebungen darstellen lässt. Es ist daher bei der Bestimmung und Festlegung der Schwingungen unerheblich, ob diese durch direkt, also als Amplitude im Verlauf der Zeit und der Frequenz dieses Musters, oder als Reihe von Sinusschwingungen spezifiziert wird.

Die Festlegung der Schwingung des Verschlusselements oder des Reinigungselements geschieht bevorzugt an die Bedürfnisse des Nutzers angepasst. Insbesondere kann diese Schwingung unter Berücksichtigung des vom Verschlusselement haltbaren Bürstentyps abhängig sein. Z.B. können die Amplituden, mit denen ein Interdentalbürsten-Reinigungselement schwingen soll, grösser gewählt sein als die Amplituden für ein Zahnbürsten-Reinigungselement.

Bei den Materialien, deren Schwingungseigenschaften bestimmt werden soll, handelt es sich insbesondere um Materialien, die sich für den Einsatz bei Zahnbürsten eignen. Diese Materialien sind bevorzugt ungiftig und feuchtigkeitsbeständig. Es ist aber auch möglich, andere Materialien zu benutzen und diese geeignet zu beschichten oder zu umhüllen oder auf andere Art ihre Oberfläche zu behandeln oder sie auf andere Art und Weise tauglich für den Einsatz bei Zahnbürsten zu machen.

Die Berechnungen und/oder Simulationen berücksichtigen bevorzugt die bekannten Schwingungseigenschaften der Materialien, und sie sind bevorzugt der Ausgangspunkt für Versuche. Versuchsergebnisse gehen wiederum bevorzugt in weitere Berechnungen und/oder Simulationen ein. Es ist aber auch möglich, direkt und ausschliesslich Versuche durchzuführen oder ausschliesslich mit Berechnung und/oder Simulationen zu arbeiten.

Die Versuche können derart gestaltet sein, dass sie auch den Schritt c), also die Bestimmung von Schwingungseigenschaften von einem oder mehreren Materialien, beinhalten. Bei der Bestimmung von Schwingungseigenschaften kann nur eine oder nur einzelne der Schwingungseigenschaften bestimmt werden. Dabei kann die Bestimmung auch in Einheiten und Versuchen geschehen, die für die Anwendung praktisch erscheinen, unabhängig davon, ob es sich um SI-Einheiten oder Standardverfahren handelt oder nicht.

Schwingungseigenschaften sind zum Beispiel die Dämpfungskonstante und die Federkonstante als Funktion von Frequenz und Schwingungsebene.

Die Schwingungseigenschaften können durch die Formgebung eines einzelnen Materials und/oder seiner Anordnung und/oder seiner Zusammensetzung und/oder der Materialwahl beeinflusst werden. Auch können mehrere Materialien genutzt werden, bei denen jeweils die Formgebung und/oder die relative Anordnung und/oder die Zusammensetzung und/oder die Auswahl der Materialien angepasst werden können.

"Anordnung" ist hier bevorzugt als Positionierung relativ zum proximalen Ende des Zahnpflegeaufsatzes und/oder relativ zum Bürstenaufsatz zu verstehen. Die "Zusammensetzung" kann zum Beispiel durch Variationen innerhalb eines Materials (z.B. unterschiedlich dichter Schaum oder variierende Mischungsverhältnisse) oder durch Kopplungsstellen (z.B. Klebe- oder Schraubverbindungen) oder durch Spannungen und auf das Material wirkende Kräfte variiert werden.

Bevorzugt werden den Simulationen und/oder Berechnungen und/oder Versuchen weitere Bedingungen auferlegt: So kann zum Beispiel gefordert werden, dass der Resonator eine stetige Oberfläche aufweist und/oder dass seine Ausdehnung als Ganzes sich in einem bestimmten Bereich befindet und er zum Beispiel eine Länge zwischen 3 und 20 cm aufweist.

Die Speicherung der ermittelten Anordnung kann einfach durch einen Prototypen oder durch Gussformen gegeben sein. Es kann sich aber auch um elektronische oder analoge Daten auf einem geeigneten Speichermedium handeln.

Es ist möglich, dass Resonatoren, die auf der Basis dieser gespeicherten Anordnung produziert werden, zum Beispiel mit geeigneten Ausgleichgewichten individuell abgestimmt werden. Eine solche Abstimmung kann bei der Produktion des Resonators geschehen oder es können Vorrichtungen vorgesehen sein, die dem Kunden oder einem Händler erlauben, eine solche Abstimmung vorzunehmen. Eine solche Vorrichtung wäre zum Beispiel eine Stellschraube oder eine Elektronik, die die Lage eines Gewichtes oder die Spannung eines Zugelementes reguliert.

Durch die vielfältigen Gestaltungsmöglichkeiten des Resonators, insbesondere durch die Verwendung von unterschiedlichen Materialien, der somit fein abstimmbaren Massenverteilung und Dämpfung und Federkonstante kann die Amplitude der Schwingung des Bürstenträgers festgelegt werden, und zwar ohne dass der Schwingungserzeuger geändert werden muss. Dies ermöglicht es, denselben Schwingungserzeuger für unterschiedliche Aufsätze zu nutzen, bei denen unterschiedliche Schwingungsamplituden und Frequenzen der maximalen Amplitude gewünscht sind.

Ein Schwingungsverlauf, bei dem sich vergleichsweise langsam eine vergleichsweise grosse Amplitude aufbaut, kann z.B. bei Interdentalbürsten gewünscht sein, da die Borsten in diesem Fall senkrecht zur Schwingungsrichtung stehen und sich durch die grossen Amplituden Verunreinigungen weit transportieren lassen. Bei Bürstentypen, bei denen die Borsten im Wesentlichen parallel zur Schwingungsrichtung stehen, sind hingegen eher kleine und gleichmässige Amplituden von Vorteil, da dies den Borstenverschleiss reduziert und Verschmutzungen primär gelöst und nicht unbedingt wegtransportiert werden sollen.

Unter der Frequenz ist hier jeweils die Frequenz, mit der die jeweilige Amplitude auftritt, gemeint. Diese kann sich, z.B. in der Nähe der Resonanz und bezogen auf die dort vorkommende maximal Amplitude, deutlich von der Anregungsfrequenz unterscheiden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine perspektivische Ansicht eines erfindungsgemässen Zahnpflegeaufsatzsets in Explosionsdarstellung.
- Fig. 2a,b: Eine Ausführungsform des Bürstenträgers und des Verschlusselements und ihr Querschnitt
- Fig. 3a, b: Eine Ausführungsform des Zahnpflegeaufsatzsets und sein Querschnitt
- Fig. 4a, b: Ein Bürstenkopf in einer weiteren Ausführungsform mit nach hinten geneigtem Kopfteil.

Grundsätzlich sind in den Figuren gleiche Teile mit gleichen Bezugszeichen versehen.

### Wege zur Ausführung der Erfindung

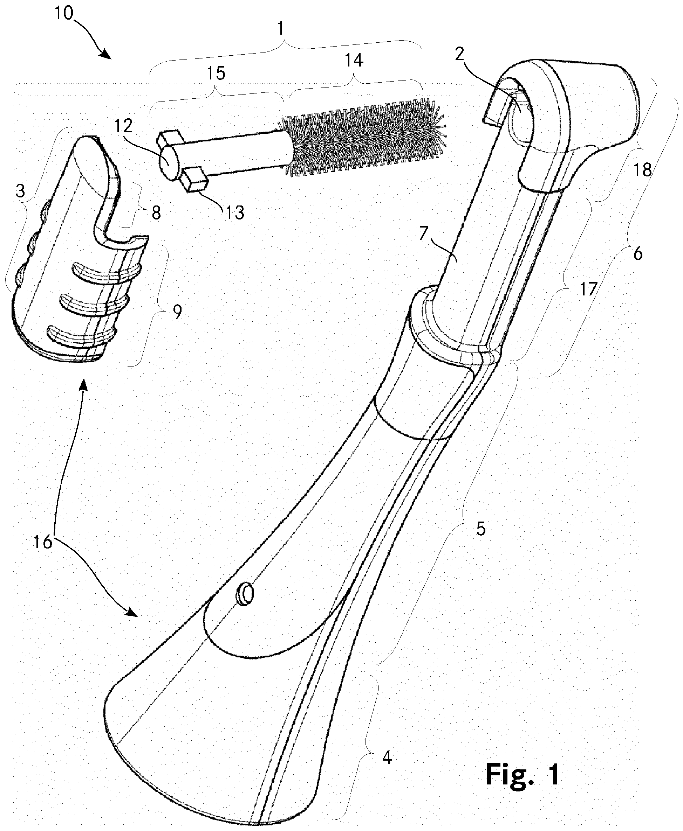

Figur 1 zeigt eine Explosionsdarstellung eines erfindungsgemässen Zahnpflegeaufsatzsets 10. Das Zahnpflegeaufsatzset 10 umfasst ein Reinigungselement 1 und einen Zahnpflegeaufsatz 16. Der Zahnpflegeaufsatz 16 umfasst wiederum ein Verschlusselement 3, ein proximales Ende 4, einen Resonator 5 und einen Bürstenträger 6.

Das Reinigungselement 1 umfasst einen Bürstenteil 14 und einen Halterteil 15. Der Bürstenteil 14 ist auf seiner Aussenseite mit Borsten versehen. Der Halterteil 15 umfasst Vorstände 13 und endet in einer zweiten Kontaktfläche 12. Es gibt zwei sich gegenüberliegende Vorstände 13, welche die Form eines Balkens mit rechteckigem Querschnitt aufweisen. Ansonsten hat der Halterteil 15 die Form eines runden Zylinders. Die Vorstände 13 ragen senkrecht und auf selber Höhe aus den Seitenwänden dieses runden Zylinders hinaus.

Das Verschlusselement 3 umfasst einen Befestigungsbereich 9 und eine Schulter 8. Der Befestigungsbereich 9 hat einen Querschnitt, welcher in etwa einer Ellipse entspricht, von der ein Bereich geringer Krümmung entfernt wurde. Auf der Aussenseite des Befestigungsbereiches 9 können Rillen hervorstehen. Die Schulter 8 schliesst sich direkt an den Befestigungsbereich 9 an und ihr Querschnitt entspricht in etwa derselben Ellipse wie der des Querschnitts im Befestigungsbereich 9, nur dass nun auch die zwei Bereiche grosser Krümmung entfernt wurden. Weiter ist die Wandstärke des Materials in der Schulter 8 nicht gleichmässig: Ausgehend von der Spitze der Schulter 8 (dies ist der Punkt auf der Symmetrieachse des Verschlusselements 3, welcher zur Begrenzung der Schulter 8 gehört, aber nicht direkt an den Befestigungsbereich 9 grenzt) ist dort die Wandstärke auf einer Breite, die ungefähr der Breite der zweiten Kontaktfläche 12 des Reinigungselements 1 entspricht, zunächst kleiner als in der Umgebung. Der Symmetrieachse des Verschlusselements nach hinten (von der Spitze der Schulter 8 weg) folgend, nimmt die Wandstärke zunächst zu und dann wieder ab. Es handelt sich hierbei um eine Kontakteinbuchtung. Die Wandstärke bleibt dann auf einer Länge, die dem Durchmesser der zweiten Kontaktfläche 12 des Reinigungselements 1 entspricht, auf einem konstanten und eher kleinen Wert und nimmt anschliessend wieder zu. Diese zweite Zunahme der Wandstärke kann sprunghaft geschehen oder in einem vergleichsweise steilen Winkel. Die Zu- und Abnahme der Wandstärke in Spitzennähe hingehen ist bevorzugt in einem flacheren Winkel (verglichen mit der zweiten Zunahme).

Das proximale Ende 4 des Zahnpflegeaufsatzes ist derart geformt, dass es auf der einen Seite an einem Schwingungserzeuger angeschlossen werden kann oder mit diesem verbunden werden kann und auf der anderen Seite in den Resonator 5 übergeht. Das proximale Ende 4 hat in etwa die Form eines Kreiskegelabschnittes, wobei die Seite mit dem grösseren Radius zur Verbindung mit dem Schwingungserzeuger geeignet ist und daher Öffnungen und Haltemittel für den Schwingungsgeber beinhaltet. Auf der Seite mit dem kleineren Radius geht das proximale Ende 4 in den Resonator 5 über. Der Resonator 5 und das proximale Ende 4 haben an dieser Stelle denselben Querschnitt, so dass ein gleichmässiger und stufenloser Übergang gegeben ist.

Der Resonator 5 hat im Wesentlichen die Form eines Kreiszylinderabschnittes, wobei sich aber die Querschnittsfläche leicht ändern kann. Insbesondere nimmt sie in dem in Figur 1 gezeigten Beispiel entlang der Längsachse des Resonators zunächst leicht ab und dann nach vorne hin wieder zu. Der Resonator 5 besteht hier aus unterschiedlichen Materialien. In dem gezeigten Beispiel bildet ein zweites Material eine Art Sattel, während ein erstes Material, welches gleich dem Material des proximalen Endes 4 und dem des Bürstenträgers 6 ist, den Rest des Volumens des Resonators 5 ausfüllt. Durch diese Materialwahl werden die Schwingungseigenschaften des Zahnpflegeaufsatzes 16 und damit des Zahnpflegeaufsatzsets 10 beeinflusst und gezielt gesteuert. Der Resonator 5 hat an einem bürstenträgernahen, vorderen Ende einen Querschnitt in einer Form, die im Wesentlichen dem Querschnitt der Schiebeflächengegend 17 mit darauf befindlichem Verschlusselement 3 entspricht.

Der Resonator 5 geht in den Bürstenträger 6 über. Dieser umfasst zwei Abschnitte: Eine Schiebeflächengegend 17 und eine Ausnehmungsumgebung 18.

Die Schiebeflächengegend 17 entspricht in ihrem Querschnitt etwa der Ellipse, die vom Verschlusselement 3 im Befestigungsbereich 9 umfasst wird. Eine Seite mit geringer Krümmung ist dabei die Schiebefläche 7. In dem Bereich gegenüber der Schiebefläche 7, die nicht vom Verschlusselement 3 umfasst wird, ist der Querschnitt der Schiebeflächengegend 17 etwas ausgebeult, so dass der Aussenquerschnitt von Schiebeflächengegend 17 mit aufgesetztem Verschlusselement 3 in etwa einer Ellipse entspricht. Die Ausbeulung hat also eine Höhe, die in etwa der Wandstärke des Verschlusselements 3 entspricht.

An der dem Resonator 5 abgewandten Seite der Schiebeflächengegend 17, also am vorderen Ende, geht die Schiebeflächengegend 17 in die Ausnehmungsumgebung 18 über. Die Ausnehmungsumgebung 18 besteht aus einem in etwa zylinderförmigen Teil, welcher sich im Wesentlichen senkrecht zur Längsachse der Schiebeflächengegend 17 erstreckt. Die Schiebefläche 7 ragt in diesen Zylinder hinein. Oberhalb der Schiebefläche 7 ist der Zylinder unterbrochen. Durch die Schiebefläche 7 ragt in der Ausnehmungsumgebung 18 die Ausnehmung 2. Oberhalb der Schiebefläche 7 hat der Zylinder eine Höhe, die ungefähr der Höhe entspricht um die das Verschlusselement 3 die Schiebefläche 7 überragt. Unterhalb der Schiebefläche 7 erstreckt sich der Zylinder auf einer Länge, die ungefähr der Länge des Halterteils 15 zwischen den Vorständen 13 und dem Bürstenteil 14 entspricht. In der Höhe der Schiebefläche 7, dort wo der Zylinder unterbrochen ist, geht der Zylinder in zwei Seitenteile über, welche sich rechts und links von der Schiebefläche 7 und senkrecht zu ihr erstrecken. Die Höhe dieser Seitenteile oberhalb der Schiebefläche 7 entspricht der Höhe des Zylinders über der Schiebefläche 7. Ihre Ausdehnung unterhalb der Schiebefläche 7 ist derart, dass ein gleichmässiger Übergang von der Ausdehnung des Zylinders auf dieser Seite zu der Ausdehnung der Ausbeulung der Schiebeflächengegend 17 geschaffen wird. Dies ist bevorzugt eine sanfte Kurve, die in etwa den Konturen des Zylinder-Schiebeflächengegend-Überganges folgt und die an diesem Übergang vorkommenden starken Krümmungen ausfüllt und somit "weicher" (d.h. weniger stark) macht.

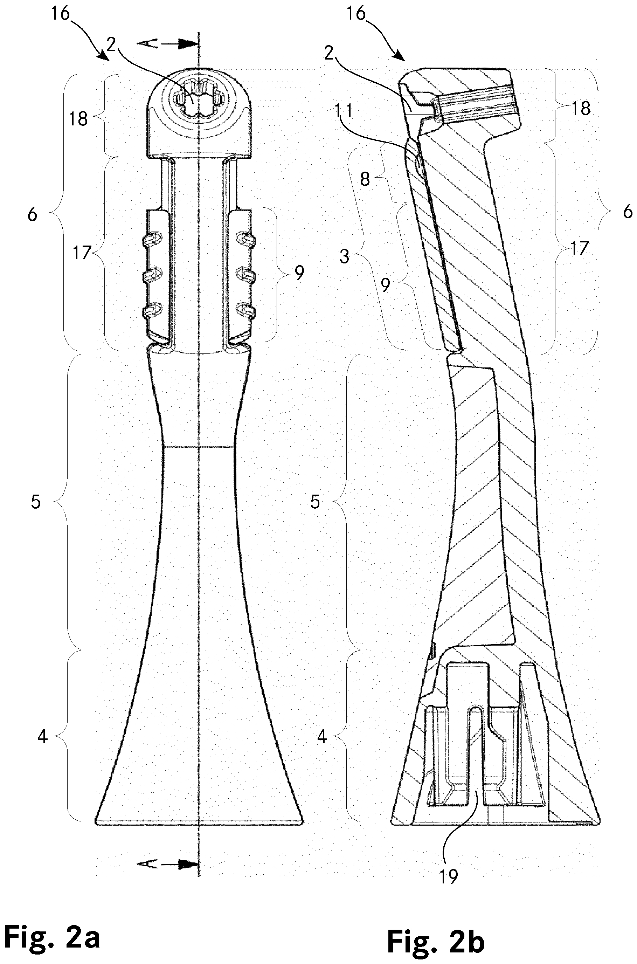

Figuren 2a und 2b zeigen Details zum Aufbau des Zahnpflegeaufsatzes 16. Hier ist nun das Verschlusselement 3 in der Schiebeflächengegend 17 des Bürstenträgers 6 montiert. Der Befestigungsbereich 9 des Verschlusselements 3 umgreift einen Teil der Schiebeflächengegend 17.

Figur 2a zeigt den Zahnpflegeaufsatz 16 von unten, wobei mit "unten" die Schiebeflächeabgewandte Seite gemeint ist. Proximales Ende 4 und Resonator 5 gehen in dieser Ansicht derart fliessend ineinander über, dass keine klare Trennung erkennbar ist. Beim Bürstenträger 6 erkennt man in dieser Ansicht, dass die oben beschriebenen Seitenteile der Ausnehmungsumgebung 18 auf der Unterseite miteinander verbunden sind. Die Form dieser Verbindung wird so gewählt, dass, wenn das Verschlusselement 3 so weit wie möglich nach vorne (also so weit weg wie möglich vom proximalen Ende) geschoben wird, der Aussenquerschnitt von Verschlusselement 3 und Ausnehmungsumgebung 18 im hinteren Teil in etwas dem Aussenquerschnitt am vordersten Ende des Resonators 5 entspricht. Im vorderen Teil geht die Form der Verbindung der Seitenteile in den Zylinder über.

Im gezeigten Beispiel hat die Ausnehmung 2 über einen Teil ihrer Höhe die Form eines Zylinders mit sternförmigem Querschnitt.

Figur 2b zeigt den Querschnitt durch den Zahnpflegeaufsatz 16 entlang der Ebene A-A, die in Figur 2a eingezeichnet ist. Im Querschnitt wird die Aufsteckverbindung 19 zur Aufnahme eines Schwingungserzeugers im proximalen Ende 4 gut sichtbar.

Die Aufsteckverbindung 19 zur Aufnahme eines Schwingungserzeugers dient zur Aufnahme eines Stifts mit einer Abflachung und einer Nut. Der Stift ist dabei Teil des Schwingungserzeugers und führt Schwingungen aus, wenn der Schwingungserzeuger in Betrieb ist. Dazu weist die Aufsteckverbindung 19 eine im Wesentlichen kreiszylindrische Aufnahme auf, welche im Aufnahmegrund eine seitliche Abflachung sowie Rastnasen aufweist. Die Aufnahme weist im Wesentlichen eine Form eines Zylindermantels auf, welcher in Öffnungsrichtung mindestens einen seitlichen Schlitz sowie nach innen ragende Rastnasen aufweist. Auf Grund des Schlitzes ist die Aufnahme im Randbereich und damit die Rastnase federnd ausgebildet. Die seitliche Abflachung im Aufnahmegrund dient zur Aufnahme des seitlich abgeflachten Endbereichs des Stiftes. Schliesslich ist die Aufsteckverbindung 19 derart ausgebildet, dass der Stift zusätzlich über Reibschluss gehalten werden kann, so dass eine Schwingungsübertragung nicht beeinträchtigt wird.

Im Resonator 5 lässt sich im Querschnitt die Ausdehnung des zweiten Materials erkennen: Dieses füllt fast 2/3 des Querschnitts des Resonators aus.

Die Längsachse des Verschlusselements 6 ist gegenüber der Längsachse des proximalen Endes 4 und der des Resonators 5 leicht (d.h. 10°- 40°, insbesondere ca. 20°) nach oben (d.h. in Richtung Schiebefläche 7) geneigt.

In dieser Ansicht lässt sich auch die Unterseite (d.h. die der Schiebefläche 7 zugewandte Seite) der Schulter 8 des Verschlusselements 3 erkennen: Diese kommt, von der Spitze des Verschlusselements 3 aus gesehen, zunächst der Schiebefläche näher und bleibt dann für eine gewisse Länge auf diesem Wert, um dann in einem Bogen erst abzunehmen und anschliessend wieder zuzunehmen. Der Bereich innerhalb dieses Bogens ist die erste Kontaktfläche 11 des Verschlusselements 3 in der Form eines Kontaktvorstandes.

Weiter lässt sich in Figur 2b auch die Form der Ausnehmung 2 erkennen: Während der sternförmige Zylinder dazu dient, einerseits den Bürstenteil 14 einfach hindurchschieben zu lassen und andererseits, in der Gebrauchsposition, den Halterteil 15 des Reinigungselements 1 zu stützen, so befinden sich im oberen Teil die, zu den Vorständen 13 komplementären, Ausnehmungen. Ihre Form entspricht in etwa einem T, bei welchem der Übergang von dem waagerechten in den senkrechten Balken in einem Winkel von mehr als 90° geschieht. Der "senkrechte" Balken dieses verzogenen "T" ist dabei der Teil, der komplementär zu den Vorständen 13 ist. In Figur 2b ist nur eine dieser komplementären Ausnehmungen zu erkennen.

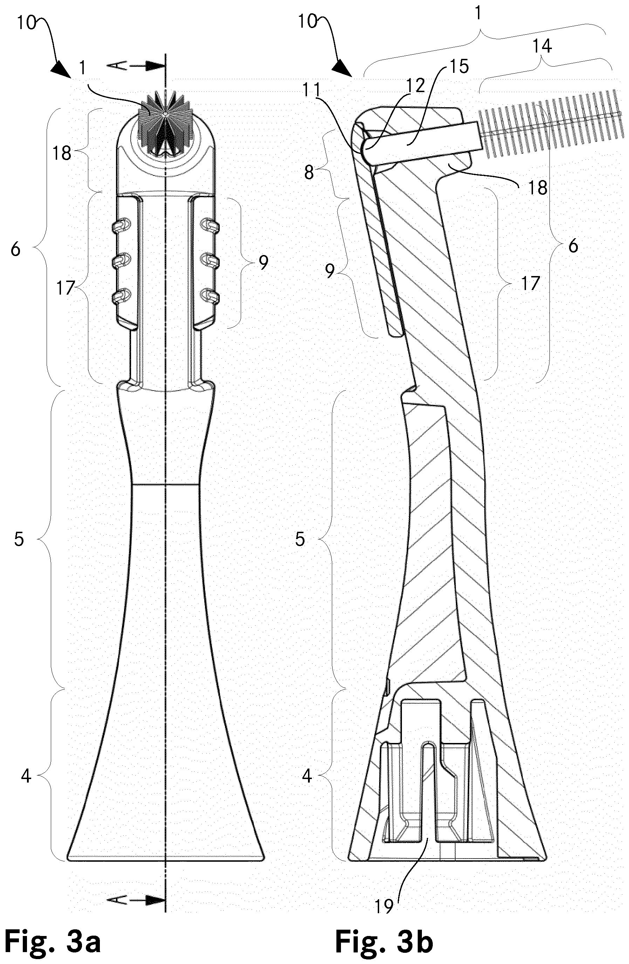

Figuren 3a und 3b zeigen das montierte Zahnpflegeaufsatzset 10. Der Zahnpflegeaufsatz 16 entspricht dem, der in den Figuren 2a und 2b gezeigt wurde. Weiter ist nun aber auch das Reinigungselement 1 in seiner Gebrauchsposition zu sehen. In Figur 3a erkennt man nur den Bürstenteil 14 mit den Borsten.

In Figur 3b wird deutlich wie das Reinigungselement 1 mit Bürstenträger 6 und Verschlusselement 3 wechselwirkt: Der Halterteil 15 liegt in dem sternförmigen ZylinderTeil der Ausnehmung und wird dort klar positioniert. Weiter liegt die erste Kontaktfläche 11 des Verschlusselements 3 direkt auf der zweiten Kontaktfläche 12 des Reinigungselements 1. Das Verschlusselement 3 bzw. seine Schulter 8 stösst dabei derart an die Ausnehmungsumgebung 18, dass eine im Wesentlichen stetige und nur leicht gekrümmte Oberfläche im Bereich der Ausnehmungsumgebung 18 entsteht. Die Vorstände 13 des Reinigungselements 1 liegen nun in den komplementären Ausnehmungen des Bürstenträgers 6. Vorstände 13 und die komplementären Ausnehmungen sind in der Figur 3b nicht sichtbar.

Anders als in den Figuren gezeigt, kann der Querschnitt vom proximalen Ende 4, dem Resonator 5 und dem Bürstenträger 6 zusammen mit dem Verschlusselement 3 auch runder oder ovaler sein oder eine andere Form aufweisen. Weiter kann das Bürstenteil und die Ausnehmung auch derart gestaltet sein, dass Bürstenteile mit anderen Formen aufgenommen werden können, wie z.B. längliche oder grössere Kreisflächen. Der Schwingungserzeuger kann insbesondere in einem Griffteil integriert sein. Alternativ kann der Zahnpflegeaufsatz auch mit einem Griffteil ohne Schwingungserzeuger genutzt werden. Ein solcher schwingungserzeugerloser Griffteil kann dann an den Aufsteckverbindungen zur Aufnahme des Schwingungserzeugers angebracht werden. Der Resonator kann auch aus nur einem Material bestehen oder aus mehr als zwei unterschiedlichen Materialien. Ausserdem kann der Resonator auch mit Bohrungen oder über Materialstrukturen wie z.B. Streben und Hohlräume angepasst werden. Die Ausnehmung kann anstelle des sternförmigen Zylinders auch einen kreiszylindrischen Teil oder einen zylindrischen Teil mit einem anderen Querschnitt aufweisen. Die Aufsteckverbindung zur Aufnahme des Schwingungserzeugers kann anders gestaltet sein: So kann zum Beispiel die Anordnung mehrere Stifte und Aufnahmen umfassen oder der Stift und die Aufnahme anders gestaltet sein. Es ist möglich, dass ein oder mehrere Stifte, die aus dem proximalen Ende reichen, in einen Griffteil oder in einen Schwingungserzeuger gesteckt werden. Auch ist es möglich, dass die Verbindung über eine Schraubverbindung hergestellt wird oder andere Verbindungsarten genutzt werden.

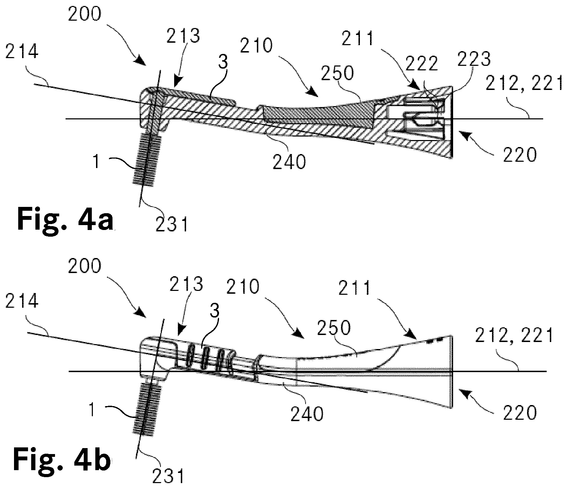

Die Figur 4a zeigt eine schematische Darstellung eines Querschnittes entlang einer Längsachse durch einen Bürstenkopf 200 einer weiteren Ausführungsform mit nach hinten geneigtem Kopfteil. Die Figur 4b zeigt weiter eine Seitenansicht gemäss der Figur 4a.

Der Bürstenkopf 200 ist eine Ausführungsform eines Zahnpflegeaufsatzsets 10.

Der Bürstenkopf 200 umfasst einen Bürstenhals 210, an welchem distal das Reinigungselement 1, vorliegend ein mit seitlich angeordneten Borsten versehener Draht, und proximal einen Adapter 220 zum Ankoppeln an einen Schwingungserzeuger 300 respektive an ein Basisgerät, angeordnet sind.

Der Bürstenkopf 200 ist in einen ersten Abschnitt 211 mit dem Adapter 220 und in einen zweiten Abschnitt 213 mit dem Reinigungselement 1 aufgeteilt. Der erste Abschnitt 211 und der zweite Abschnitt 213 weisen jeweils eine Hauptachse 212 respektive 214 auf. Der Adapter 220 weist eine Adapterachse 221 auf, welche wiederum mit der ersten Hauptachse 212 übereinstimmt. Die Adapterachse 121 bezeichnet auch eine Koppelungsrichtung zwischen dem Bürstenkopf 200 und dem Schwingungserzeuger 300. Im Bereich des Adapters 220 ist der Bürstenhals 210 in Richtung des proximalen Endes hin im Wesentlichen konisch aufgeweitet. Die zweite Hauptachse 214 ist zur ersten Hauptachse 212 vorliegend um einen Winkel von 10° geknickt, so dass das Reinigungselement 1 geringfügig nach hinten, entgegen der Richtung des Reinigungselements 1 geknickt ist. Der Winkel kann aber anderweitig gewählt sein, zum Beispiel kann der Winkel einen Wert zwischen 8° und 12° aufweisen. Das Reinigungselement 1 weist eine Ausrichtungsachse 231 auf, welche vorliegend mit der Richtung des Drahtes übereinstimmt. Diese Ausrichtungsachse 231 schneidet die erste Hauptachse 212 entsprechend in einem Winkel von 100° auf der Seite des Reinigungselements 1. Damit können die Innenseiten der vorderen Schneidezähne besonders gut gereinigt werden.

Der Bürstenhals 210 besteht im Wesentlichen aus zwei unterschiedlichen Materialien (siehe oben).

Schliesslich ist an der dem Reinigungselement 1 gegenüberliegenden Seite des Bürstenhalses 210 ein entlang des Bürstenhalses in Längsrichtung verschiebbares Verschlusselement 3 ausgebildet, womit das austauschbare Reinigungselement 1 am Bürstenhals 210 fixiert werden kann. Dieses Verschlusselement 3 ist in der Figur 4b gut ersichtlich.

## Patentansprüche

1. Zahnpflegeaufsatzset (10), bestehend aus
a) einem Zahnpflegeaufsatz (16) mit einem distalen und einem proximalen Ende, wobei das distale Ende ausgelegt ist, ein Reinigungselement (1) aufzunehmen und das proximale Ende (4) ausgelegt ist, mit einem Griffstück in Wirkverbindung gebracht zu werden, weiter umfassend:
i. einen Bürstenträger (6) mit einer Ausnehmung (2) zur Aufnahme des Reinigungselements (1), welche sich durch den Bürstenträger (6) und im Wesentlichen quer zur Längsausdehnung des Bürstenträgers (6) erstreckt;
ii. ein Verschlusselement (3), welcher in Längsrichtung verschiebbar am Bürstenträger (6) gelagert ist, und
wobei das Verschlusselement (3) zumindest einen Bereich aufweist, der über eine Oberseite der Ausnehmung (2) geschoben werden kann und zwar insbesondere über einen Abschnitt der Ausnehmung (2) der sich vollständig durch den Bürstenträger (6) erstreckt, wobei das Verschlusselement (3) in dem Bereich, der über die Ausnehmung (2) des Bürstenträgers (6) geschoben werden kann, eine Schulter mit einer ersten Kontaktfläche aufweist,
und
b) ein Reinigungselement (1) das geeignet für die Aufnahme in einen Zahnpflegeaufsatz (16), umfassend einen Bürstenteil (14) und einen Halterteil (15), wobei der Halterteil (15) borstenlos ist und, vom Bürstenteil (14) beabstandet, mindestens einen Vorstand (13) aufweist und der Halterteil (15) eine zweite Kontaktfläche (12) aufweist und die Schulter des Verschlusselements (3) dazu ausgelegt ist, die zweite Kontaktfläche (12) des Reinigungselements (1) zu kontaktieren,
**dadurch gekennzeichnet, dass** das Verschlusselement (3), insbesondere die erste Kontaktfläche (11), und das in der Ausnehmung (2) gehaltene Reinigungselement (1), insbesondere mit seiner zweiten Kontaktfläche (12), eine Rastverbindung bilden.

2. Zahnpflegeaufsatzset (10), gemäss Anspruch 1, mit einem Zahnpflegeaufsatz (16) bei dem Bürstenträger (6) und Verschlusselement (3) aus Kunststoff bestehen, insbesondere je aus einem Kunststoff, wobei die Shore-A Härte des Bürstenträgers (6) verschieden ist von der Shore-A Härte des Verschlusselements (3).

3. Zahnpflegeaufsatzset (10), gemäss Anspruch 2, wobei die Shore-A Härte des Bürstenträgers (6) höher ist als die Shore-A Härte des Verschlusselements (3).

4. Zahnpflegeaufsatzset (10), gemäss einem der Ansprüche 1 bis 3, mit einem Zahnpflegeaufsatz (16) bei dem die Ausnehmung (2) zumindest teilweise einen nicht-kreisrunden Querschnitt bezüglich einer Längsachse der Ausnehmung (2) aufweist, wobei insbesondere der Querschnitt bezüglich der Längsachse der Ausnehmung (2) zwei gegenüberliegende, radiale Ausbuchtungen aufweist.

5. Zahnpflegeaufsatzset (10), gemäss einem der Ansprüche 1 bis 4, mit einem Zahnpflegeaufsatz (16) bei dem das Verschlusselement (3) einen Befestigungsbereich (9) umfasst, welcher im montierten Zustand eine Schiebefläche (7) des Bürstenträgers (6) teilweise derart dicht umgreift, dass eine Verschiebung des Verschlusselements (3) gegenüber dem Bürstenträger (6) auf der Schiebefläche (7) mit einzelnen Fingern möglich ist, eine Trennen von Verschlusselement (3) und Bürstenträger (6) aber einen grösseren Kraftaufwand, insbesondere einen Kraftaufwand, der nicht mehr mit einzelnen Fingern, aber noch ohne Werkzeug mit den Händen und Armen von einem erwachsenen, durchschnittlichen Menschen ausgeübt werden kann, benötigt.

6. Zahnpflegeaufsatzset (10), gemäss einem der Ansprüche 1 bis 5, mit einem Zahnpflegeaufsatz (16) bei dem das proximale Ende (4) eine Aufsteckverbindung zur Aufnahme eines Schwingungserzeugers aufweist.

7. Zahnpflegeaufsatzset (10), gemäss einem der Ansprüche 1 bis 6, **dadurch gekennzeichnet, dass** der Zahnpflegeaufsatz (16) einen Resonator (5) aufweist, der sich durch eine inhomogene Massenverteilung und insbesondere eine stetige Oberfläche auszeichnet, wobei die inhomogene Massenverteilung insbesondere derart gestaltet ist, dass eine Anregung mit einer bekannten Frequenz und Amplitude am proximalen Ende (4) zu einer vordefinierten Schwingung des Bürstenträgers (6) führt.

8. Zahnpflegeaufsatzset (10) nach einem der Ansprüche 1 bis 7, wobei das Reinigungselement (1) **dadurch gekennzeichnet ist, dass** der mindestens eine Vorstand (13) zumindest teilweise einen nicht-kreisrunden Querschnitt bezüglich einer Längsachse des Reinigungselements (1) aufweist, insbesondere dass es sich um zwei gegenüberliegende Vorstände (13) handelt, die insbesondere balkenförmig sind und deren Oberseiten insbesondere weiter bürstenseitig liegen als die zweite Kontaktfläche (12).

9. Zahnpflegeaufsatzset (10), gemäss einem der Ansprüche 1 bis 8, wobei die Ausnehmung (2) des Bürstenträgers (6) komplementär zu dem mindestens einen Vorstand (13) des Reinigungselements (1) gestaltet ist.

10. Zahnpflegeaufsatzset (10), gemäss einem der Ansprüche 1-9, wobei die Ausnehmung (2) des Bürstenträgers (6) derart ausgestaltet ist, dass, im montierten Zustand, die zweite Kontaktfläche (12) des Reinigungselements (1) über die Schiebefläche (7) herausragt, wobei die Höhe, um die die zweite Kontaktfläche (12) über die Schiebefläche (7) herausragt, kleiner ist, als die Höhe, um die das Verschlusselement (3) die Schiebfläche (7) überragt.

11. Zahnpflegeaufsatzset (10), gemäss einem der Ansprüche 1-10, wobei die Rastverbindung einen derart dichten Kontakt zwischen Reinigungselement (1) und Zahnpflegeaufsatz (16) herstellt, dass Schwingungen des Zahnpflegeaufsatzes (16) im Wesentlichen ohne Verluste auf das Reinigungselement (1) übertragen werden.

12. Zahnpflegeaufsatzset (10), gemäss einem der Ansprüche 1-11, wobei das Reinigungselement im Bereich der Vorstände (13) und der zweiten Kontaktfläche (12) aus einem Material mit einer Shore-A Härte grösser als die Shore-A Härte des Verschlusselements (3) besteht, insbesondere, dass das Reinigungselement (10) in dem besagten Bereich aus einem Material mit einer Shore-A Härte gleich der Shore-A Härte des Bürstenträgers (6) besteht.

13. Verfahren zur Entwicklung eines Zahnpflegeaufsatzes (16) eines Zahnpflegeaufsatzsets gemäss einem der Ansprüche 1 bis 12, **dadurch gekennzeichnet, dass** es folgende Schritte umfasst:
a) Bestimmung der Schwingung, insbesondere von Frequenzen und Amplituden, eines Schwingungserzeugers;
b) Festlegung einer Schwingung, insbesondere von Frequenzen und Amplituden, die das Verschlusselement oder das Reinigungselement ausführen soll;
c) Bestimmung von Schwingungseigenschaften eines oder mehrerer unterschiedlicher Materialien, insbesondere Kunststoffe;
d) Berechnung und/oder Simulationen und/oder Versuche zur Anordnung und/oder Formgebung von einem oder mehreren der Materialien, insbesondere Kunststoffe, bei denen die in Schritt b) festgelegte Schwingung durch eine Anregung mit der in Schritt a) bestimmten Schwingung im Wesentlichen erreicht wird;
e) Speicherung der in Schritt d) erreichten Anordnung und der dadurch erzeugten Massenverteilung, die insbesondere inhomogen ist.

## Claims

1. Dental care attachment set (10), consisting of
a) a dental care attachment (16) with a distal end and a proximal end, wherein the distal end is designed to receive a cleaning element (1), and the proximal end (4) is designed to be brought into operative connection with a grip piece, further comprising:
i. a brush carrier (6) with a recess (2) for receiving the cleaning element (1), which recess (2) extends through the brush carrier (6) and substantially transversely with respect to the longitudinal extent of the brush carrier (6);
ii. a closure element (3) which is mounted on the brush carrier (6) so as to be slidable in the longitudinal direction, and
wherein the closure element (3) has at least one region that can be pushed over an upper face of the recess (2), in particular over a portion of the recess (2) that extends fully through the brush carrier (6), wherein the closure element (3), in the region that can be pushed over the recess (2) of the brush carrier (6), has a shoulder with a first contact face
and
b) a cleaning element (1) suitable for being received in a dental care attachment (16), comprising a brush part (14) and a holder part (15), wherein the holder part (15) has no bristles and, spaced apart from the brush part (14), has at least one protrusion (13), and the holder part (15) has a second contact face (12), and the shoulder of the closure element (3) is designed to contact the second contact face (12) of the cleaning element (1),
**characterized in that** the closure element (3), in particular the first contact face (11), and the cleaning element (1) held in the recess (2), in particular with its second contact face (12), form a locking connection.

2. Dental care attachment set (10) according to Claim 1, having a dental care attachment (16) in which brush carrier (6) and closure element (3) are made of plastic, in particular of a respective plastic, wherein the Shore A hardness of the brush carrier (6) is different from the Shore A hardness of the closure element (3).

3. Dental care attachment set (10) according to Claim 2, wherein the Shore A hardness of the brush carrier (6) is greater than the Shore A hardness of the closure element (3).

4. Dental care attachment set (10) according to one of Claims 1 to 3, having a dental care attachment (16) in which the recess (2) has at least in part a non-circular cross section with respect to a longitudinal axis of the recess (2), wherein in particular the cross section has two opposite radial protuberances with respect to the longitudinal axis of the recess (2) .

5. Dental care attachment set (10) according to one of Claims 1 to 4, having a dental care attachment (16) in which the closure element (3) comprises a fastening region (9) which, in the assembled state, partially engages sealingly around a slide surface (7) of the brush carrier (6) in such a way that a movement of the closure element (3) in relation to the brush carrier (6) on the slide surface (7) is possible with individual fingers, whereas a separation of closure element (3) and brush carrier (6) requires a greater application of force, in particular an application of force that can no longer be exerted with individual fingers but, still without tools, can be exerted by the hands and arms of an average human adult.

6. Dental care attachment set (10) according to one of Claims 1 to 5, having a dental care attachment (16) in which the proximal end (4) has a socket connection for receiving an oscillation generator.

7. Dental care attachment set (10) according to one of Claims 1 to 6, **characterized in that** the dental care attachment (16) has a resonator (5), which is distinguished by a non-homogeneous distribution of mass and in particular by a continuous surface, wherein the non-homogeneous distribution of mass is configured in particular in such a way that an excitation with a known frequency and amplitude at the proximal end (4) leads to a predefined oscillation of the brush carrier (6).

8. Dental care attachment set (10) according to one of Claims 1 to 7, wherein the cleaning element (1) is **characterized in that** the at least one protrusion (13) has at least in part a non-circular cross section with respect to a longitudinal axis of the cleaning element (1), in particular **in that** there are two mutually opposite protrusions (13), which are in particular beam-shaped and whose upper faces in particular lie further towards the brush than the second contact face (12).

9. Dental care attachment set (10) according to one of Claims 1 to 8, wherein the recess (2) of the brush carrier (6) is designed to complement the at least one protrusion (13) of the cleaning element (1).

10. Dental care attachment set (10) according to one of Claims 1-9, wherein the recess (2) of the brush carrier (6) is designed in such a way that, in the assembled state, the second contact face (12) of the cleaning element (1) projects above the slide surface (7), wherein the height by which the second contact face (12) projects above the slide surface (7) is less than the height by which the closure element (3) protrudes from the slide surface (7).

11. Dental care attachment set (10) according to one of Claims 1-10, wherein the locking connection produces such a tight contact between cleaning element (1) and dental care attachment (16) that oscillations of the dental care attachment (16) are transmitted to the cleaning element (1) substantially without loss.

12. Dental care attachment set (10) according to one of Claims 1-11, wherein the cleaning element, in the region of the protrusions (13) and of the second contact face (12), is made of a material with a Shore A hardness greater than the Shore A hardness of the closure element (3), in particular in that the cleaning element (10), in said region, is made of a material with a Shore A hardness equal to the Shore A hardness of the brush carrier (6).

13. Method for developing a dental care attachment (16) of a dental care attachment set according to one of Claims 1 to 12, **characterized in that** it comprises the following steps:
a) determining the oscillation, in particular frequencies and amplitudes, of an oscillation generator;
b) establishing an oscillation, in particular frequencies and amplitudes, that the closure element or the cleaning element is intended to perform;
c) determining oscillation properties of one or more different materials, in particular plastics;
d) calculating and/or simulating and/or trial arranging and/or shaping of one or more of the materials, in particular plastics, in which the oscillation established in step b) is substantially achieved by an excitation with the oscillation determined in step a);
e) storing the arrangement achieved in step d) and the resulting distribution of mass, which is in particular non-homogeneous.

## Revendications

1. Ensemble à accessoire d'hygiène dentaire (10), constitué
a) d'un accessoire d'hygiène dentaire (16) doté d'une extrémité distale et d'une extrémité proximale, l'extrémité distale étant conçue pour recevoir un élément de nettoyage (1) et l'extrémité proximale (4) étant conçue pour être amenée en liaison fonctionnelle avec une partie de préhension, comportant en outre :
i. un support de brosse (6) doté d'un évidement (2) pour la réception de l'élément de nettoyage (1), lequel évidement s'étend à travers le support de brosse (6) et sensiblement transversalement à l'étendue longitudinale du support de brosse (6) ;
ii. un élément de fermeture (3), lequel est monté sur le support de brosse (6) de manière coulissante dans la direction longitudinale, et
l'élément de fermeture (3) comprenant au moins une région qui peut être poussée sur un côté supérieur de l'évidement (2) et ce en particulier sur une partie de l'évidement (2) qui s'étend complètement à travers le support de brosse (6), l'élément de fermeture (3) comprenant, dans la région qui peut être poussée sur l'évidement (2) du support de brosse (6), un épaulement doté d'une première surface de contact,
et
b) d'un élément de nettoyage (1) qui est approprié à la réception dans un accessoire d'hygiène dentaire (16), comportant une partie formant brosse (14) et une partie de retenue (15), la partie de retenue (15) étant dépourvue de poils et comprenant, de manière espacée de la partie formant brosse (14), au moins une saillie (13), et la partie de retenue (15) comprenant une deuxième surface de contact (12) et l'épaulement de l'élément de fermeture (3) étant conçu pour venir en contact avec la deuxième surface de contact (12) de l'élément de nettoyage (1),
**caractérisé en ce que** l'élément de fermeture (3), en particulier la première surface de contact (11) et l'élément de nettoyage (1) retenu dans l'évidement (2), en particulier avec sa deuxième surface de contact (12), forment une liaison par encliquetage.

2. Ensemble à accessoire d'hygiène dentaire (10), selon la revendication 1, comportant un accessoire d'hygiène dentaire (16) dans lequel le support de brosse (6) et l'élément de fermeture (3) sont constitués de matière synthétique, en particulier respectivement d'une matière synthétique, la dureté Shore A du support de brosse (6) étant différente de la dureté Shore A de l'élément de fermeture (3).

3. Ensemble à accessoire d'hygiène dentaire (10), selon la revendication 2, la dureté Shore A du support de brosse (6) étant supérieure à la dureté Shore A de l'élément de fermeture (3).

4. Ensemble à accessoire d'hygiène dentaire (10), selon l'une des revendications 1 à 3, comportant un accessoire d'hygiène dentaire (16) dans lequel l'évidement (2) présente au moins partiellement une section transversale non circulaire par rapport à un axe longitudinal de l'évidement (2), la section transversale comprenant en particulier, par rapport à l'axe longitudinal de l'évidement (2), deux renflements radiaux opposés.

5. Ensemble à accessoire d'hygiène dentaire (10), selon l'une des revendications 1 à 4, comportant un accessoire d'hygiène dentaire (16) dans lequel l'élément de fermeture (3) comporte une région de fixation (9), laquelle, à l'état monté, vient en prise de manière étroite autour d'une surface de coulissement (7) du support de brosse (6) partiellement de telle sorte qu'un coulissement de l'élément de fermeture (3) par rapport au support de brosse (6) sur la surface de coulissement (7) est possible à l'aide de doigts individuels, mais qu'une séparation de l'élément de fermeture (3) et du support de brosse (6) nécessite un plus grand apport de force, en particulier un apport de force qui peut être exercé non plus à l'aide de doigts individuels mais sans outil à l'aide des mains et des bras d'une personne adulte moyenne.

6. Ensemble à accessoire d'hygiène dentaire (10), selon l'une des revendications 1 à 5, comportant un accessoire d'hygiène dentaire (16) dans lequel l'extrémité proximale (4) comprend une liaison enfichable pour la réception d'un générateur de vibrations.

7. Ensemble à accessoire d'hygiène dentaire (10), selon l'une des revendications 1 à 6, **caractérisé en ce que** l'accessoire d'hygiène dentaire (16) comprend un résonateur (5) qui se **caractérise par** une répartition de masse non homogène et en particulier une surface continue, la répartition de masse non homogène étant en particulier configurée de telle sorte qu'une excitation avec une fréquence et une amplitude connues à l'extrémité proximale (4) mène à une vibration prédéfinie du support de brosse (6).

8. Ensemble à accessoire d'hygiène dentaire (10), selon l'une des revendications 1 à 7, l'élément de nettoyage (1) étant **caractérisé en ce que** l'au moins une saillie (13) présente au moins partiellement une section transversale non circulaire par rapport à un axe longitudinal de l'élément de nettoyage (1), en particulier **en ce qu'**il s'agit de deux saillies opposées (13) qui sont en particulier en forme de barres et dont les côtés supérieurs sont situés en particulier davantage du côté de la brosse que la deuxième surface de contact (12) .

9. Ensemble à accessoire d'hygiène dentaire (10), selon l'une des revendications 1 à 8, l'évidement (2) du support de brosse (6) étant configuré de manière complémentaire à l'au moins une saillie (13) de l'élément de nettoyage (1).

10. Ensemble à accessoire d'hygiène dentaire (10), selon l'une des revendications 1 à 9, l'évidement (2) du support de brosse (6) étant configuré de telle sorte qu'à l'état monté, la deuxième surface de contact (12) de l'élément de nettoyage (1) dépasse de la surface de coulissement (7), la hauteur sur laquelle la deuxième surface de contact (12) dépasse de la surface de coulissement (7) étant inférieure à la hauteur sur laquelle l'élément de fermeture (3) dépasse de la surface de coulissement (7).

11. Ensemble à accessoire d'hygiène dentaire (10), selon l'une des revendications 1 à 10, la liaison par encliquetage produisant un contact étroit entre l'élément de nettoyage (1) et l'accessoire d'hygiène dentaire (16) de telle sorte que des vibrations de l'ensemble à accessoire d'hygiène dentaire (16) soient transmises sensiblement sans pertes à l'élément de nettoyage (1).

12. Ensemble à accessoire d'hygiène dentaire (10), selon l'une des revendications 1 à 11, l'élément de nettoyage étant, dans la région des saillies (13) et de la deuxième surface de contact (12), constitué d'un matériau dont la dureté Shore A est supérieure à la dureté Shore A de l'élément de fermeture (3), en particulier l'élément de nettoyage (10) étant, dans ladite région, constitué d'un matériau dont la dureté Shore A est égale à la dureté Shore A du support de brosse (6).

13. Procédé de développement d'un accessoire d'hygiène dentaire (16) d'un ensemble à accessoire d'hygiène dentaire selon l'une des revendications 1 à 12, **caractérisé en ce qu'**il comporte les étapes suivantes :
a) détermination de la vibration, en particulier de fréquences et d'amplitudes, d'un générateur de vibrations ;
b) spécification d'une vibration, en particulier de fréquences et d'amplitudes que l'élément de fermeture ou l'élément de nettoyage doit effectuer ;
c) détermination de caractéristiques de vibrations d'un(e) ou plusieurs matériaux, en particulier matières synthétiques ;
d) calcul et/ou simulations et/ou essais pour l'agencement et/ou le façonnage d'un(e) ou plusieurs des matériaux, en particulier des matières synthétiques, pour lesquels la vibration spécifiée à l'étape b) est obtenue sensiblement par une excitation par la vibration déterminée à l'étape a) ;
e) enregistrement de l'agencement obtenu à l'étape d) et de la répartition de masse ainsi produite, laquelle est en particulier non homogène.
